# EUROPEAN PATENT APPLICATION

(11) **EP 4 287 093 A1**
(43) Date of publication of application: **06.12.2023**
(21) Application number: 23176124.8
(22) Date of filing: 30.05.2023
(51) Int. Cl.: G06Q 10/20

(54) **SYSTEMS AND METHODS FOR MODEL-BASED ENGINE SYSTEM DESIGN**

(30) Priority: 01.06.2022 US 202217830088
(71) Applicant: RTX Corporation, Farmington, CT 06032 (US)
(72) Inventor: SANDOVAL, Jonathan P., Glastonbury (US)
(74) Representative: Dehns

(57) **Abstract**

A method for designing a system (100) implementing model-based system engineering with maintenance forecasting may utilize a systems model (102) and a maintenance forecast model (104). The systems model (102) receives (202) an initial systems design, generates (204) an initial set of system design specifications based on the initial systems design, generates (204) an initial concept of operations based on the initial systems design, and outputs (206) the initial set of system design specifications and the initial concept of operations to the maintenance forecast model (104). The maintenance forecast model (104) determines (208) a first maintenance prediction for the initial systems design based on the initial set of system design specifications and the initial concept of operations received from the systems model (102). The systems model (102) then receives (210) the first maintenance prediction from the maintenance forecast model (104), and creates (212) a first updated systems design based on the first maintenance prediction.

## Description

### FIELD

The present disclosure relates generally to aircraft engines, and more particularly to systems and methods for model-based engine system design based on maintenance forecasting.

### BACKGROUND

During aircraft engine design, model-based systems engineering (MBSE) is employed to support activities related to the system requirements, design, analysis, verification, and validation of complex aircraft engine parts and systems. Once the system design is complete, the design specifications are provided to a logistics forecast model. The logistics forecast model predicts the maintenance and/or replacement schedule (e.g., the time on wing, cycle life, or service intervals) for the various components of the system. The logistics forecast is currently performed late in the design process (i.e., after the MBSE process is completed). This leads to less than optimally spaced maintenance intervals. For example, one part of an engine could have a life of 2000 cycles while another part on the same engine has a life of 2500 cycles. In such cases, the 2500 cycles part may be replaced earlier than needed or a second maintenance operation may be performed not long after replacement of the 2000 cycles part. Such a scenario leads to increased costs for maintenance and/or parts.

### SUMMARY

In accordance with a first aspect of the invention, a method for designing a system implementing model-based system engineering with maintenance forecasting is disclosed. The method includes receiving, by a systems model, an initial systems design, generating, by the systems model, an initial set of system design specifications based on the initial systems design, generating, by the systems model, an initial concept of operations based on the initial systems design, outputting, by the systems model, the initial set of system design specifications and the initial concept of operations to a maintenance forecast model, determining, by the maintenance forecast model, a first maintenance prediction for the initial systems design based on the initial set of system design specifications and the initial concept of operations received from the systems model, receiving, by the systems model, the first maintenance prediction from the maintenance forecast model, and creating, by the systems model, a first updated systems design based on the first maintenance prediction.

In various embodiments, the method further comprises generating, by the systems model, a second set of system design specifications based on the first updated systems design, generating, by the systems model, a second concept of operations based on the first updated systems design, outputting, by the systems model, the second set of system design specifications and the second concept of operations to the maintenance forecast model, generating, by the maintenance forecast model, a second maintenance prediction based on the second set of system design specifications and the second concept of operations, receiving, by the systems model, the second maintenance prediction from the maintenance forecast model, and creating, by the systems model, a second updated systems design based on the second maintenance prediction.

In various embodiments, creating, by the systems model, the first updated systems design comprises modifying, by the systems model, at least one parameter of a first system component of the system.

In various embodiments, modifying, by the systems model, the at least one parameter of the first system component decreases a difference between at least one of a first maintenance interval of the first system component and a second maintenance interval of a second system component or a first life cycle of the first system component and a second life cycle of the second system component.

In various embodiments, the method further comprises sending, by the systems model, a first set of system component specifications for the first system component to a mechanical model.

In various embodiments, the method further comprises updating a product definition for the first system component based on an output of the mechanical model.

In various embodiments, the method further comprises creating a digital twin for a product manufacture based on the product definition.

In various embodiments, the method further comprises comparing, by the systems model, the digital twin to the first set of system component specifications for the first system component, and updating, by the systems model, information corresponding to the first system component, wherein the information is stored in a tangible, non-transitory computer-readable storage medium of the systems model.

In accordance with another aspect of the invention a system for model-based systems engineering based on maintenance forecasting is disclosed. The system comprises a systems model configured to generate and output system design specifications, and a maintenance forecast model in communication with the systems model, wherein the maintenance forecast model is configured to receive the system design specifications output by the systems model and generate maintenance predictions based on the system design specifications. The systems model is configured receive the maintenance predictions from the maintenance forecast model and generate an updated systems design based on the maintenance predictions.

In various embodiments, the systems model is configured to modifying at least one parameter of a first system component, and wherein modifying the at least one parameter of the first system component decreases a difference between at least one of a first maintenance interval of the first system component and a second maintenance interval of a second system component or a first life cycle of the first system component and a second life cycle of the second system component.

In various embodiments, the system further comprises a mechanical model in communication with the systems model, wherein the systems model is configured to send a first set of component specifications for the first system component to the mechanical model.

In various embodiments, the systems model is configured to receive a digital twin generated from a manufactured first system component, and wherein the systems model is configured to compare the digital twin to the first set of component specifications and update information corresponding to the first system component based on the comparison.

In accordance with another aspect of the invention, an article of manufacture is disclosed. The article of manufacture includes a tangible, non-transitory computer-readable storage medium having instructions stored thereon for model-based system engineering based on maintenance forecasting. In response to execution by a systems model, the instructions cause the systems model to perform operations comprising receiving, by the systems model, an initial systems design, generating, by the systems model, a first set of system design specifications based on the initial systems design, generating, by the systems model, a first concept of operations based on the initial systems design, outputting, by the systems model, the first set of system design specifications and the first concept of operations to a maintenance forecast model, receiving, by the systems model, a first maintenance prediction from the maintenance forecast model, the first maintenance prediction being determined by the maintenance forecast model based on the first set of system design specifications and the first concept of operations, and creating, by the systems model, an updated systems design based on the first maintenance prediction.

In various embodiments, the operations further comprise generating, by the systems model, a second set of system design specifications based on the updated systems design, generating, by the systems model, a second concept of operations based on the updated systems design, outputting, by the systems model, the second set of system design specifications and the second concept of operations to the maintenance forecast model, receiving, by the systems model, a second maintenance prediction from the maintenance forecast model, the second maintenance prediction being determined by the maintenance forecast model based on the second set of system design specifications and the second concept of operations, and creating, by the systems model, a second updated system design based on the second maintenance prediction.

In various embodiments, creating, by the systems model, the updated systems design comprises modifying, by the systems model, at least one parameter of a first system component of the system.

In various embodiments, modifying, by the systems model, the at least one parameter of the first system component is configured to decrease a difference between at least one of a first maintenance interval of the first system component and a second maintenance interval of a second system component or a first life cycle of the first system component and a second life cycle of the second system component.

In various embodiments, modifying, by the systems model, the at least one parameter of the first system component comprises changing a design of the first system component to decrease at least one of a time or a cost associated with removing the first system component from the system.

In various embodiments, the operations further comprise sending, by the systems model, system component specifications for the first system component to a mechanical model.

In various embodiments, the operations further comprise receiving, by the systems model, a digital twin generated from a manufactured first system component, comparing, by the systems model, the digital twin to the system component specifications for the first system component, and updating, by the systems model, information corresponding to the first system component, wherein the information is stored in the tangible, non-transitory computer-readable storage medium.

In various embodiments, the operations further comprise receiving, by the systems model, results of a comparison of digital maintenance, removal, and overhaul data to the digital twin, and updating, by the systems model, the information corresponding to the first system component, wherein the information is stored in the tangible, non-transitory computer-readable storage medium.

The foregoing features and elements may be combined in various combinations without exclusivity, unless expressly indicated otherwise. These features and elements as well as the operation thereof will become more apparent in light of the following description and the accompanying drawings. It should be understood, however, the following description and drawings are intended to be exemplary in nature and non-limiting.

### BRIEF DESCRIPTION OF THE DRAWINGS

The subject matter of the present disclosure is particularly pointed out and distinctly claimed in the concluding portion of the specification. A more complete understanding of the present disclosure, however, may best be obtained by referring to the detailed description and claims when considered in connection with the drawing figures, wherein like numerals denote like elements.
FIG. 1 illustrates a system for model-based system engineering with maintenance forecasting, in accordance with various embodiments; and
FIGs. 2A, 2B, and 2C illustrate flowcharts for a method for implementing model-based system engineering with maintenance forecasting, in accordance with various embodiments.

### DETAILED DESCRIPTION

The detailed description of exemplary embodiments herein refers to the accompanying drawings, which show exemplary embodiments by way of illustration and their best mode. While these exemplary embodiments are described in sufficient detail to enable those skilled in the art to practice the inventions, it should be understood that other embodiments may be realized and that logical, chemical and mechanical changes may be made without departing from the spirit and scope of the disclosure. Thus, the detailed description herein is presented for purposes of illustration only and not of limitation. For example, the steps recited in any of the method or process descriptions may be executed in any order and are not necessarily limited to the order presented.

Furthermore, any reference to singular includes plural embodiments, and any reference to more than one component or step may include a singular embodiment or step. Also, any reference to attached, fixed, connected or the like may include permanent, removable, temporary, partial, full and/or any other possible attachment option. Additionally, any reference to without contact (or similar phrases) may also include reduced contact or minimal contact.

Systems and methods of the present disclosure provide modeling, simulations, and analysis of a system design, such as a gas turbine engine. The modeling, simulations, and analysis may be performed by a system model which receives maintenance predictions generated by a maintenance forecast model. The maintenance forecast model generates the maintenance predictions based on source information provided by the system model. Providing maintenance predictions into the system model allows for harmonization of part life cycles. For example, a part having a life of 2500 cycles may be optimized to a life of 2000 cycles such that it can be replaced with the other 2000 cycle part, thereby reducing the overall downtime for the aircraft and/or allowing for cost and weight savings with regard to the part. Decreasing the life to 2000 cycles may, for example, allow for lower cost materials. Although described herein with respect to aircraft engines, the present disclosure is not limited in this regard.

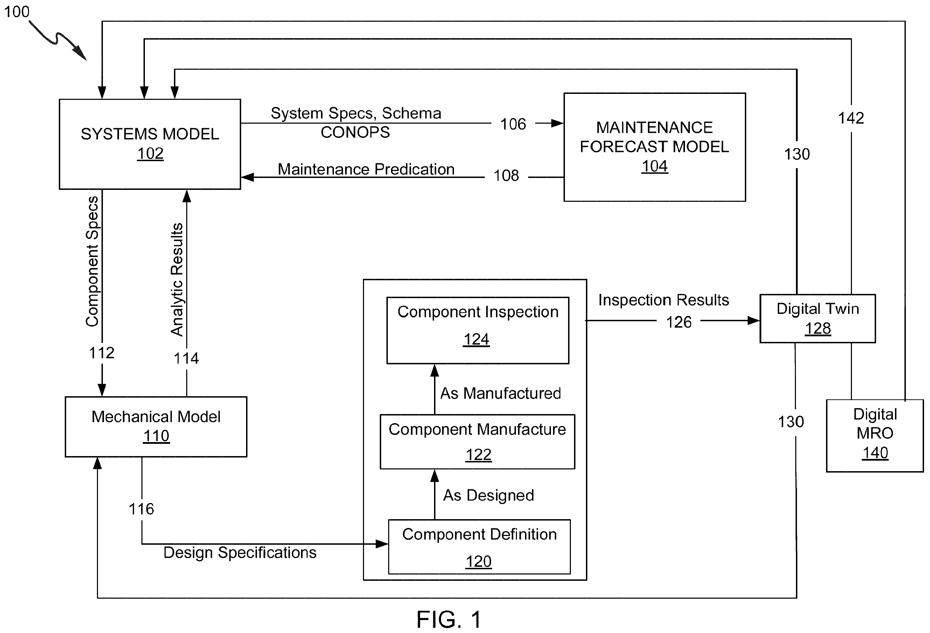

With reference to FIG. 1, a system 100 for model-based system engineering with maintenance forecasting is shown, in accordance with various embodiments. In accordance with various embodiments, system 100 includes a systems model 102. In various embodiments, the systems model 102 includes one or more systems model controllers (e.g., processors) and one or more tangible, non-transitory memories capable of implementing digital or programmatic logic. In various embodiments, for example, the one or more controllers are one or more of a general purpose processor, digital signal processor (DSP), application specific integrated circuit (ASIC), field programmable gate array (FPGA), or other programmable logic device, discrete gate, transistor logic, or discrete hardware components, or any various combinations thereof or the like. System program instructions and/or controller instructions may be loaded onto a non-transitory, tangible computer-readable medium having instructions stored thereon that, in response to execution by a system model controller, cause the system model controller to perform various operations.

The term "non-transitory" is to be understood to remove only propagating transitory signals per se from the claim scope and does not relinquish rights to all standard computer-readable media that are not only propagating transitory signals per se. Stated another way, the meaning of the term "non-transitory computer-readable medium" and "non-transitory computer-readable storage medium" should be construed to exclude only those types of transitory computer-readable media which were found in *In Re Nuijten* to fall outside the scope of patentable subject matter under 35 U.S.C. § 101.

System 100 further includes a maintenance forecast model 104. In various embodiments, the maintenance forecast model 104 includes one or more forecast model controllers (e.g., processors) and one or more tangible, non-transitory memories capable of implementing digital or programmatic logic. In various embodiments, for example, the one or more controllers are one or more of a general purpose processor, DSP, ASIC, FPGA, or other programmable logic device, discrete gate, transistor logic, or discrete hardware components, or any various combinations thereof or the like. System program instructions and/or controller instructions may be loaded onto a non-transitory, tangible computer-readable medium having instructions stored thereon that, in response to execution by a forecast model controller, cause the forecast model controller to perform various operations.

In accordance with various embodiments, systems model 102 is configured to communicate with maintenance forecast model 104 via, for example, an application programming interface (API). The systems model 102 is configured to generate a system model 106 (e.g., systems design specifications, systems schema, and concepts of operations). Systems model 102 is configured to output the system model 106 to a maintenance forecast model 104. Maintenance forecast model 104 determines a maintenance prediction 108 for the received system model 106. The maintenance prediction 108 for the system model 106 may include a maintenance prediction (e.g., time on wing, maintenance interval, life cycle, etc.) for each of component of system model 106. Systems model 102 uses the maintenance prediction 108 to update or modify the system model 106.

For example, systems model 102 may generate an initial system model 106, based on an initial (or abstract) system design. Initial system model 106 may include an initial set of specifications for each component of system model 106. Systems model 102 sends the initial system model 106 to maintenance forecast model 104, and maintenance forecast model 104 generates an initial maintenance prediction for the initial system model 106.

Systems model 102 may then generate an updated system model 106 based on the initial maintenance prediction 108. In generating the updated system model 106, systems model 102 may modify the design specifications (e.g., design parameters) of one or more system components based on the maintenance prediction(s) 108 for one or more other system component(s). For example, systems model 102 may determine, as discussed in further detail below, that each time a first system component is removed for maintenance or replacement, a second system component is also removed. Systems model 102 may then decide to modify a material of the second system component to decrease a maintenance interval or life cycle for the second system component. Alternatively, systems model 102 may modify a material of the first system component to increase a maintenance interval or life cycle for the first system component. In this regard, systems model 102 creates an updated system model 106 to decrease a difference between the maintenance interval and/or life cycle of the second system component and the maintenance interval and/or life cycle of the first component.

In various embodiments, systems model 102 may change a design of the second system component to allow the second system component to be more easily removed. For example, in the updated system model 106, systems model 102 may replace a welded coupling to second system component with a fastener, and/or systems model 102 may change an integrally formed second system component with a second system component having separable parts (e.g., second system component as an assembly) form, and/or systems model 102 may relocate a flange of the second system component to allow easier access to a fastener coupled the flange, etc.

Systems model 102 generates an updated system model 106 and outputs the updated system model 106 to maintenance forecast model 104. Maintenance forecast model 104 determines a maintenance prediction 108 based on the updated system model 106. Systems model 102 may continue generating updated system models 106 based on each new updated maintenance prediction 108, and maintenance forecast model 104 continues generating updated maintenance predictions 108 based on each new updated system model 106, until a final system model 106 is achieved. In this regard, system 100 may be configured to employ simulations with different levels of added abstraction to determine the real life implications of the system design choices.

In accordance with various embodiments, systems model 102 may be in communication with a mechanical model 110. The mechanical model 110 includes one or more mechanical model controllers (e.g., processors) and one or more tangible, non-transitory memories capable of implementing digital or programmatic logic. In various embodiments, for example, the one or more controllers are one or more of a general purpose processor, DSP, ASIC, FPGA, or other programmable logic device, discrete gate, transistor logic, or discrete hardware components, or any various combinations thereof or the like. System program instructions and/or mechanical model controller instructions may be loaded onto a non-transitory, tangible computer-readable medium having instructions stored thereon that, in response to execution by a mechanical model controller, cause the mechanical model controller to perform various operations.

Systems model 102 may output system component specifications 112 to mechanical model 110. Mechanical model may generate analytic results 114 based on the component specifications 112 and output analytic results 114 to systems model 102.

In accordance with various embodiments, mechanical model 110 generates design specifications 116 for each system component of the final system model 106. Design specification 116 are used to generate a product (i.e., system component) definition 120. Product definition 120 may be provided to the manufacturer of the system component. In various embodiments, product definition 120 may be stored on a digital thread or digital ledger (e.g., on distributed ledger located on a blockchain network). In this regard, any time systems model 102 generates a final system model 106 with new design specifications 116 for a system component, the product definition 120 of the system component may be updated on the digital thread.

In accordance with various embodiments, product definition 120 is used to manufacture the system component 122. Inspection results 126 are generated from an inspection 124 of the system component 122. In various embodiments, a digital twin 128 may be generated from inspection results 126. Digital twin 128 may comprise a model generated from the actual manufactured system component 122. In various embodiments, digital twin data 130 may be provided to mechanical model 110. Mechanical model 110 may update the product definition 120 or otherwise store the digital twin data. In various embodiments, digital twin data 130 may also be provided to systems model 102. Systems model 102 may update store the digital twin data and/or may modify the system model algorithm(s), assumption(s), or other instruction(s) based on the digitation twin data 130. For example, systems model 102, maintenance forecast model 104 and/or mechanical model 110 may employ machine learning to enhance and/or improve the accuracy of the models based on real world data.

In various embodiments, digital maintenance, repair, and overhaul (MRO) data 140 may be obtained over the operating life of the system component 122. The digital MRO data 140 may include data related one or more properties of to the component (e.g., cracking, distortion, wear, etc.). Digital MRO data 140 may include data related when other components in the engine/system in which the system component 122 is installed received maintenance, repair, and/or overhaul. The digital MRO data may be provided to systems model 102 and/or maintenance forecast model 104. The digital MRO data may be compared to the digital twin 128. Results 142 of a comparison of the digital MRO data 140 to the digital twin 128 may be provided to systems model 102. Systems model 102 may update store the digital MRO data and the results 142 of the comparison of the digital MRO data to the digital twin 128. Systems model 102, maintenance forecast model 104 and/or mechanical model 110 may modify the model algorithm(s), assumption(s), and/or other instruction(s) based on the digital MRO data and/or the results 142. Systems model 102 may also receive data related to the time on wing, particular aircraft, flight conditions, weather, engine operating conditions, engine fault conditions, anomalies (e.g., bird strike, foreign object debris) and/or any other data related to operating condition(s) which may affect the life of the system component or the system in which the system component was installed.

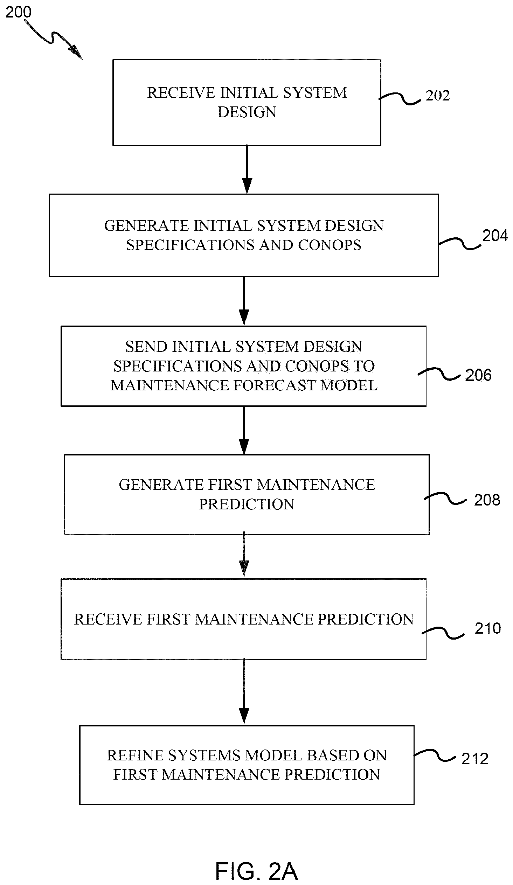

With reference to FIG. 2A, a method 200 for implementing model-based system engineering with maintenance forecasting is illustrated. In accordance with various embodiments, method 200 may be performed and/or carried out by system 100 in FIG. 1. In accordance with various embodiments and with combined reference to FIG. 1 and FIG. 2A, method 200 may begin by systems model 102 receiving an initial systems design (step 202). In various embodiments, the initial systems design may input into systems model 102 by a systems engineer. Method 200 may further include systems model 102 generating an initial set of system design specifications and/or an initial concept of operations based on the initial systems design (step 204). Method 200 may further include the systems model 102 outputting the initial set of system design specifications and the initial concept of operations to maintenance forecast model 104 (step 206).

In accordance with various embodiments, maintenance forecast model 104 may then generate and output a first maintenance prediction for the initial systems design based on the initial set of system design specifications and the initial concept of operations received from the systems model (step 208). Method 200 may include systems model 102 receiving the first maintenance prediction from the maintenance forecast model 104 (step 210) and systems model 102 refining the initial system model based on the first maintenance prediction (step 212). In various embodiments, step 212 may include systems model 102 generating a first updated systems design based on the first maintenance prediction.

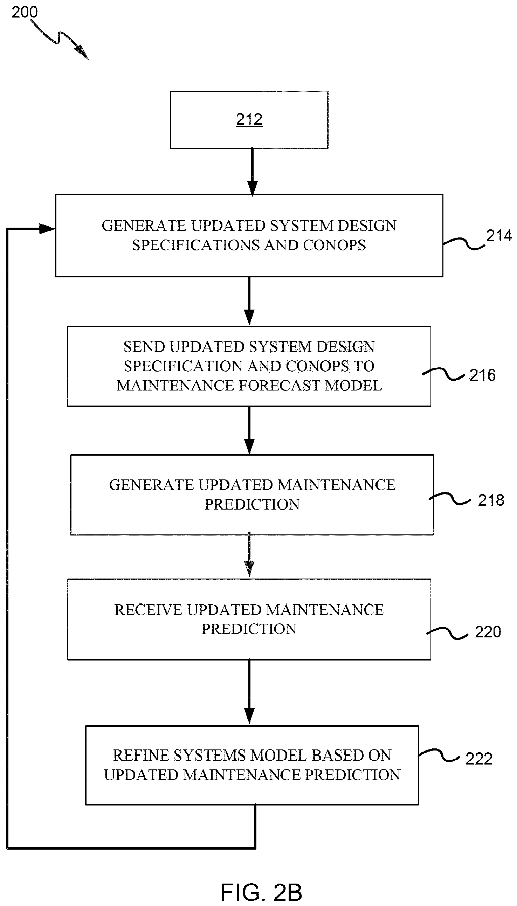

With additional reference to FIG. 2B, in various embodiments, method 200 may further comprise the systems model 102 generating an updated set of system design specifications and/or an updated concept of operations based on the refined/updated systems design (step 214). Systems model 102 may output the updated system design specifications and updated concept of operations to the maintenance forecast model 104 (step 216).

In accordance with various embodiments, maintenance forecast model 104 may generate and output an updated maintenance prediction based on the updated system design specifications and updated concept of operations (step 218). Method 200 may further include systems model 102 receiving the updated maintenance prediction from maintenance forecast model 104 (step 220) and refining the updated system model based on the updated maintenance prediction (step 222). In various embodiments, step 222 may include systems model 102 generating a second updated systems design based on a second maintenance prediction. In accordance with various embodiment, method 200 may include repeating step 214 through step 222 until a desired final systems design is achieved.

In various embodiments, steps 212, 222 may include systems model 102 modifying at least one parameter of a first system component of the system. In various embodiments, modifying the at least one parameter of the first system component may decrease a difference between at least one of a first maintenance interval of the first system component and a second maintenance interval of a second system component or a first life cycle of the first system component and a second life cycle of the second system component.

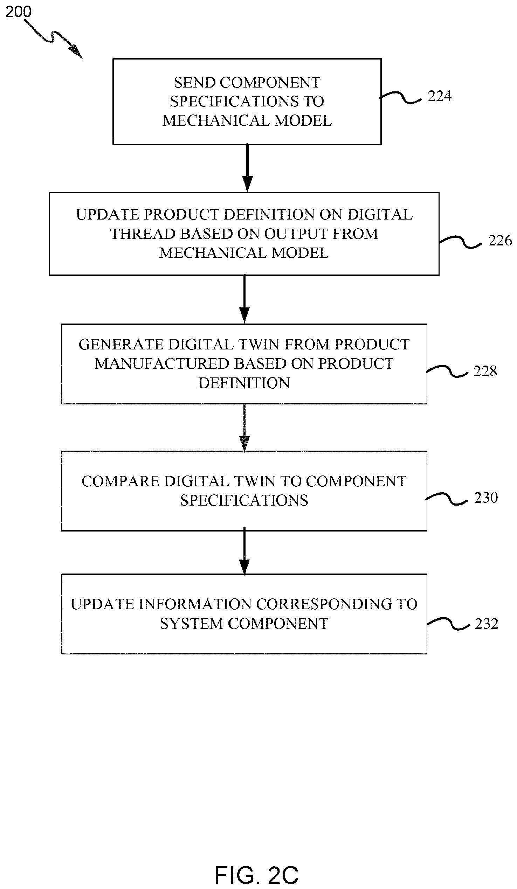

With combined reference to FIG. 2C and FIG. 1, in various embodiments, method 200 may systems model 102 sending a first set of system component specifications 112 for the first system component to mechanical model 110 (step 224). In various embodiments, method 200 may further comprise updating a product definition 120 for the first system component based on an output 116 of the mechanical model 110 (Step 226). In various embodiments, a digital twin may be created for a product 122 manufactured based on the product definition 120 (step 228). In various embodiments, method 200 may further include systems model 102 comparing the digital twin 128 to the first set of system component specifications 112 for the first system component (step 230) and updating information corresponding to the first system component (step 232).

In various embodiments, method 200 may also comparing digital maintenance, removal, and overhaul data to the digital twin. Method 200 may further include systems model 102 receiving results of a comparison of the digital maintenance, removal, and overhaul data to the digital twin. Systems model may then update the information corresponding to the first system component.

Benefits, other advantages, and solutions to problems have been described herein with regard to specific embodiments. Furthermore, the connecting lines shown in the various figures contained herein are intended to represent exemplary functional relationships and/or physical couplings between the various elements. It should be noted that many alternative or additional functional relationships or physical connections may be present in a practical system. However, the benefits, advantages, solutions to problems, and any elements that may cause any benefit, advantage, or solution to occur or become more pronounced are not to be construed as critical, required, or essential features or elements of the inventions. The scope of the disclosure is accordingly to be limited by nothing other than the appended claims, in which reference to an element in the singular is not intended to mean "one and only one" unless explicitly so stated, but rather "one or more." Moreover, where a phrase similar to "at least one of A, B, or C" is used in the claims, it is intended that the phrase be interpreted to mean that A alone may be present in an embodiment, B alone may be present in an embodiment, C alone may be present in an embodiment, or that any combination of the elements A, B and C may be present in a single embodiment; for example, A and B, A and C, B and C, or A and B and C.

Systems, methods and apparatus are provided herein. In the detailed description herein, references to "one embodiment", "an embodiment", "various embodiments", etc., indicate that the embodiment described may include a particular feature, structure, or characteristic, but every embodiment may not necessarily include the particular feature, structure, or characteristic. Moreover, such phrases are not necessarily referring to the same embodiment. Further, when a particular feature, structure, or characteristic is described in connection with an embodiment, it is submitted that it is within the knowledge of one skilled in the art to affect such feature, structure, or characteristic in connection with other embodiments whether or not explicitly described. After reading the description, it will be apparent to one skilled in the relevant art(s) how to implement the disclosure in alternative embodiments.

Furthermore, no element, component, or method step in the present disclosure is intended to be dedicated to the public regardless of whether the element, component, or method step is explicitly recited in the claims. No claim element herein is intended to invoke 35 U.S.C. 112(f), unless the element is expressly recited using the phrase "means for." As used herein, the terms "comprises", "comprising", or any other variation thereof, are intended to cover a non-exclusive inclusion, such that a process, method, article, or apparatus that comprises a list of elements does not include only those elements but may include other elements not expressly listed or inherent to such process, method, article, or apparatus.

## Claims

1. A method for designing a system implementing model-based system engineering with maintenance forecasting, comprising
receiving, by a systems model, an initial systems design;
generating, by the systems model, an initial set of system design specifications based on the initial systems design;
generating, by the systems model, an initial concept of operations based on the initial systems design;
outputting, by the systems model, the initial set of system design specifications and the initial concept of operations to a maintenance forecast model;
determining, by the maintenance forecast model, a first maintenance prediction for the initial systems design based on the initial set of system design specifications and the initial concept of operations received from the systems model;
receiving, by the systems model, the first maintenance prediction from the maintenance forecast model; and
creating, by the systems model, a first updated systems design based on the first maintenance prediction.

2. The method of claim 1, further comprising:
generating, by the systems model, a second set of system design specifications based on the first updated systems design;
generating, by the systems model, a second concept of operations based on the first updated systems design;
outputting, by the systems model, the second set of system design specifications and the second concept of operations to the maintenance forecast model;
generating, by the maintenance forecast model, a second maintenance prediction based on the second set of system design specifications and the second concept of operations;
receiving, by the systems model, the second maintenance prediction from the maintenance forecast model; and
creating, by the systems model, a second updated systems design based on the second maintenance prediction.

3. The method of claim 1 or 2, wherein creating, by the systems model, the first updated systems design comprises modifying, by the systems model, at least one parameter of a first system component of the system.

4. The method of claim 3, wherein modifying, by the systems model, the at least one parameter of the first system component decreases a difference between at least one of a first maintenance interval of the first system component and a second maintenance interval of a second system component or a first life cycle of the first system component and a second life cycle of the second system component.

5. The method of claim 3 or 4, further comprising sending, by the systems model, a first set of system component specifications for the first system component to a mechanical model.

6. The method of claim 5, further comprising updating a product definition for the first system component based on an output of the mechanical model.

7. The method of claim 6, further comprising creating a digital twin for a product manufacture based on the product definition;
optionally, further comprising:
comparing, by the systems model, the digital twin to the first set of system component specifications for the first system component; and
updating, by the systems model, information corresponding to the first system component, wherein the information is stored in a tangible, non-transitory computer-readable storage medium of the systems model.

8. A system for model-based systems engineering based on maintenance forecasting, the system comprising:
a systems model configured generate and output system design specifications; and
a maintenance forecast model in communication with the systems model, wherein the maintenance forecast model is configured to receive the system design specifications output by the systems model and generate maintenance predictions based on the system design specifications, and
the systems model is configured receive the maintenance predictions from the maintenance forecast model and generate an updated systems design based on the maintenance predictions.

9. The system of claim 8, wherein the systems model is configured to modifying at least one parameter of a first system component, and wherein modifying the at least one parameter of the first system component decreases a difference between at least one of a first maintenance interval of the first system component and a second maintenance interval of a second system component or a first life cycle of the first system component and a second life cycle of the second system component.

10. The system of claim 9, further comprising a mechanical model in communication with the systems model, wherein the systems model is configured to send a first set of component specifications for the first system component to the mechanical model;
optionally, wherein the systems model is configured to receive a digital twin generated from a manufactured first system component, and wherein the systems model is configured to compare the digital twin to the first set of component specifications and update information corresponding to the first system component based on the comparison.

11. An article of manufacture including a tangible, non-transitory computer-readable storage medium having instructions stored thereon for model-based system engineering based on maintenance forecasting and that, in response to execution by a systems model, cause the systems model to perform operations comprising:
receiving, by the systems model, an initial systems design;
generating, by the systems model, a first set of system design specifications based on the initial systems design;
generating, by the systems model, a first concept of operations based on the initial systems design;
outputting, by the systems model, the first set of system design specifications and the first concept of operations to a maintenance forecast model;
receiving, by the systems model, a first maintenance prediction from the maintenance forecast model, the first maintenance prediction being determined by the maintenance forecast model based on the first set of system design specifications and the first concept of operations; and
creating, by the systems model, an updated systems design based on the first maintenance prediction.

12. The article of claim 11, wherein the operations further comprise:
generating, by the systems model, a second set of system design specifications based on the updated systems design;
generating, by the systems model, a second concept of operations based on the updated systems design;
outputting, by the systems model, the second set of system design specifications and the second concept of operations to the maintenance forecast model;
receiving, by the systems model, a second maintenance prediction from the maintenance forecast model, the second maintenance prediction being determined by the maintenance forecast model based on the second set of system design specifications and the second concept of operations; and
creating, by the systems model, a second updated system design based on the second maintenance prediction.

13. The article of claim 11 or 12, wherein creating, by the systems model, the updated systems design comprises modifying, by the systems model, at least one parameter of a first system component of the system.

14. The article of claim 13;
wherein modifying, by the systems model, the at least one parameter of the first system component is configured to decrease a difference between at least one of a first maintenance interval of the first system component and a second maintenance interval of a second system component or a first life cycle of the first system component and a second life cycle of the second system component; and/or
wherein modifying, by the systems model, the at least one parameter of the first system component comprises changing a design of the first system component to decrease at least one of a time or a cost associated with removing the first system component from the system.

15. The article of claim 13 or 14, wherein the operations further comprise sending, by the systems model, system component specifications for the first system component to a mechanical model;
optionally, wherein the operations further comprise:
receiving, by the systems model, a digital twin generated from a manufactured first system component;
comparing, by the systems model, the digital twin to the system component specifications for the first system component; and
updating, by the systems model, information corresponding to the first system component, wherein the information is stored in the tangible, non-transitory computer-readable storage medium;
optionally, wherein the operations further comprise:
receiving, by the systems model, results of a comparison of digital maintenance, removal, and overhaul data to the digital twin; and
updating, by the systems model, the information corresponding to the first system component, wherein the information is stored in the tangible, non-transitory computer-readable storage medium.
